Europäisches Patentamt

European Patent Office

Office européen des brevets

(19)

(11) Numéro de publication: **0 130 123 B1**

(12) **FASCICULE DE BREVET EUROPEEN**

(45) Date de publication du fascicule du brevet: **31.08.88**

(51) Int. Cl.⁴: **B 60 J 1/17, E 06 B 3/58**

(21) Numéro de dépôt: **84401289.8**

(22) Date de dépôt: **21.06.84**

(54) **Vitrage pour véhicule automobile et procédé pour sa fabrication.**

(30) Priorité: **24.06.83 DE 3322799**

(43) Date de publication de la demande:
**02.01.85 Bulletin 85/01**

(45) Mention de la délivrance du brevet:
**31.08.88 Bulletin 88/35**

(84) Etats contractants désignés:
**AT BE CH DE FR GB IT LI LU NL SE**

(56) Documents cités:
**EP-A-0 061 027**
**US-A-1 375 914**

(73) Titulaire: **SAINT-GOBAIN VITRAGE**
**Les Miroirs 18, avenue d'Alsace**
**F-92400 Courbevoie (FR)**
(84) **BE CH FR GB IT LI LU NL SE AT**
(73) Titulaire: **VEGLA Vereinigte Glaswerke GmbH**
**Viktoriaallee 3-5**
**D-5100 Aachen (DE)**
(84) **DE**

(72) Inventeur: **Kunert, Heinz**
**Am Krieler Kom 23**
**D-5000 Köln (DE)**

(74) Mandataire: **Muller, René et al**
**SAINT-GOBAIN RECHERCHE 39, quai Lucien Lefranc**
**F-93304 Aubervilliers (FR)**

Courier Press, Leamington Spa, England.

## Description

L'invention concerne des vitrages, notamment de vitrages en verre pour véhicules automobiles.

Plus précisément, elle concerne des vitrages pour véhicules automobiles dont la périphérie est garnie de lisières, généralement métalliques, et profilées en forme de U de façon à maintenir le vitrage par serrage ou pincement entre les deux branches du U.

On rencontre de tels vitrages, entourés de lisières profilées, dans les véhicules automobiles, par exemple comme fenétres coulissantes de portière. On connait, dans cette application, par exemple par la publication de brevet allemand DE-A-3 030 948, des systèmes selon lesquels on dispose le long du bord inférieur du vitrage, sur l'une de ses faces, une couche cuite d'une couleur céramique dont la surface est décapée; en outre, on engage par la force sur ledit bord, une lisière métallique profilée en U, qui, lors de l'ouverture et de la fermeture de la fenétre, transmet les forces mécaniques au vitrage. On intercale, entre le vitrage et la lisière, une bande ou un profilé en un matériau souple et élastique; la couche de céramique sert dans une telle structure à accroitre la force de liaison entre les éléments.

Il est également connu, et courant, de procéder à la fixation sur un vitrage de lisières métalliques profilées en U, de façon à enserrer le vitrage entre les deux branches du U, en interposant entre lesdites branches une colle durcissable. Ce mode de fixation conduit certes à une liaison durable entre les éléments, mais il présente en revanche un inconvénient, à savoir que les colles usuelles exigent un temps de durcissement relativement long. Pendant ce temps, il n'est pas possible de poursuivre la manipulation des vitrages, par exemple de les monter dans la carrosserie d'un véhicule, car alors la lisière métallique pourrait se décaler par rapport au vitrage.

Ainsi il n'est pas possible de fixer une lisière métallique sur un vitrage en procédant par collage et en se plaçant sur la ligne méme de montage d'un véhicule. Au contraire, pour ne pas ralentir le rythme de l'assemblage des divers éléments du véhicule, on est obligé, après avoir appliqué la lisière, de sortir de la ligne d'assemblage pour laisser à la colle le temps de durcir. Ceci implique des opérations, notamment de transport, supplémentaires, ainsi qu'une augmentation correspondante des coûts.

L'invention se propose de remédier à ces inconvénients. Elle propose notamment de fournir un vitrage particulièrement adapté pour que l'on puisse monter sur sa périphérie, par serrage, une ou plusieurs lisières métalliques, sans qu'il soit nécessaire d'introduire une matière collante entre le vitrage et la lisière. L'invention propose également de fournir un procédé particulièrement adapté pour l'obtention d'un tel vitrage, ainsi que pour l'établissement d'une liaison durable entre une lisière métallique et la périphérie du vitrage, indépendamment de tout collage.

A cette fin, l'invention a pour objet un vitrage dont une zone périphérique, sur au moins l'une de ses faces ultérieurement en contact avec la lisière métallique, est garnie d'un revétement à base d'un polymère fortement élastique qui adhère à la surface du verre.

L'épaisseur du revétement peut varier, mais on choisit de préférence une épaisseur comprise entre 0,5 mm et 2 mm environ. La présence du revétement a plusieurs effets favorables: d'une part, il augmente le coefficient de frottement de la lisière: le frottement du matériau constitutif de la lisière, généralement un acier relativement souple, est plus important sur un tel revétement que sur du verre; d'autre part, sous l'effet de la pression de serrage exercée par la lisière dans laquelle on vient engager le vitrage, le revétement se déforme élastiquement, de sorte qu'il épouse la forme de l'élément de surface de la lisière avec lequel il est en contact. Par cette déformation, on accroit la surface de contact entre la lisière et le revétement, ce qui améliore encore le maintien recherché. En particulier, on peut envisager de garnir l'aile ou la branche de la lisière en contact avec le revétement de saillies qui pénêtrent localement dans ledit revétement élastique. Il se produit ainsi entre la lisière et le verre, par l'intermédiaire du revétement, une liaison qui d'une part, est solide et durable et, d'autre part, présente, vis-à-vis d'une éventuelle pénétration d'eau ou d'humidité l'étanchéité requise.

Les matériaux qui constituent le revétement élastique à appliquer sur le vitrage peuvent étre fort variés. On peut citer, à titre d'exemples particulièrement appropriés, des matières plastiques polymérisables et extrudables, c'est-à-dire susceptibles d'étre déposées sur la surface du verre à l'aide d'une buse d'extrusion. Plus particulièrement, on peut citer des masses de polyuréthane à un composant, durcissable à l'humidité, telles qu'elles sont décrites par exemple dans le brevet américain US-A-3 779 794. Il va de soi que d'autres compositions pourraient étre utilisées, pourvu qu'elles présentent les propriétés souhaitées d'élasticité, qu'elles s'appliquent facilement sur le verre, et, le cas échéant par l'intermédiaire d'une couche d'ancrage appropriée, qu'elles présentent une bonne adhérence vis-à-vis du verre.

D'autres caractéristiques et avantages de l'invention apparaîtront au cours de la description détaillée suivante d'exemples de réalisation, en relation avec les figures annexées 1 à 4.

Les figures 1 à 3 représentent différents vitrages selon l'invention, garnis d'une lisière essentiellement profilée en forme de E, la partie enserrant le vitrage étant elle même profilée en forme de U.

La figure 4 représente un vitrage revêtu le long de sa periphérie, d'un revétement élastique dont la surface est cannelée.

L'invention trouve une application privilégiée dans les vitres coulissantes de portières pour véhicules automobiles. Elle présente notamment l'avantage déjà mentionné, qui consiste à autoriser le montage de la lisière sur le vitrage directement sur la ligne de fabrication du véhicule. Les exemples de réalisation qui vont suivre décrivent de telles vitres pour portières de véhicules garnies le long de leurs bords verticaux d'une lisière dont la section est profilée en forme de E. Le E définit deux sections profilées en forme de U. L'une des sections profilées en forme de U sert à la fixation de la lisière à la vitre par un effet de pincement entre les deux branches dudit U, l'autre à la fixation et au guidage de la vitre dans la carrosserie.

Le vitrage 1 est généralement un vitrage monolithique en verre trempé d'environ 4 mm d'épaisseur. Sur deux de ses côtés, à savoir les côtés qui, lorsque le vitrage est monté dans la carrosserie, sont verticaux et sur la face tournée vers l'intérieur de l'habitacle du véhicule, il présente une bande d'un revêtement élastique 4 d'environ 1 à 2 cm de largeur et de 0,5 à 2 mm d'épaisseur. Entre le revêtement 4 et la surface de verre se trouve une couche d'ancrage 5. Le revêtement 4, à l'état durci, a des propriétés d'élasticité et sous l'effet de la branche 8 de la lisière 9, il se déforme élastiquement jusqu'à un point tel qu'il épouse la forme de la surface de ladite branche 8 et il se forme ainsi une surface d'adhérence accrue entre la branche 8 et le revêtement 4.

Tout de suite après la fabrication du vitrage nu, c'est-àdire à un moment où la surface du verre, est fortement réactive et ne présente aucune impureté, on dépose sur ladite surface une couche de fond 5 compatible avec la matière utilisée pour le revêtement 4. Comme couche de fond, on peut utiliser par exemple des compositions, telles qu'elles sont décrites par exemple dans le brevet US-A-3 779 794. Suivant le type de couche de fond employée et la température, il faut de 2 à 5 minutes pour que la couche de fond durcisse. Dès qu'elle est durcie, on dépose sur ladite couche de fond, à l'aide d'une buse d'extrusion appropriée, une couche d'environ 2 mm d'épaisseur d'une masse de polyuréthane à un composant, durcissable à l'humidité, et présentant de bonnes qualités d'adhérence au verre, dans une composition telle qu'elle est décrite par exemple dans le brevet US-A-3 779 794. Quand cela est nécessaire, on ajuste la viscosité de la masse extrudée à la valeur désirée par chauffage, ou régulation de la température.

Pour accélérer le processus de durcissement, on poursuit le procédé par un traitement de surface avec de la vapeur d'eau. En procédant ainsi, le revêtement 4 est en quelques minutes durci suffisamment sur au moins une partie de son épaisseur.

Après le durcissement superficiel ou total du revêtement 4, le vitrage 1 est prêt à être empilé ou transporté de la façon usuelle. Lors de l'empilement des vitrages les uns sur les autres, ainsi que lors de leur transport, le revêtement 4 sert simultanément d'espaceur entre lesdits vitrages. Il offre en outre une protection des bords du vitrage contre des sollicitations mécaniques indésirables. On peut accroître encore cette fonction de protection quand on applique le revêtement 4 également sur la tranche 2 du vitrage.

Le montage de la lisière profilée 9 sur le vitrage 1 a lieu dans l'atelier de montage du véhicule. La lisière 9 doit présenter une élasticité suffisante, pour assurer à elle seule, par le simple effet de pincement, un certain maintien du vitrage. La lisière profilée est en un métal résilient, et, de façon avantageuse, en tôle d'acier souple. La lisière profilée présente une branche 8 dont la conformation est telle que dans une direction longitudinale, elle présente une arête 10 protubérante. Ladite arête 10, pénètre dans le revêtement élastique et contribue à la réalisation d'une liaison homogène entre la lisière profilée 9 et le vitrage l.

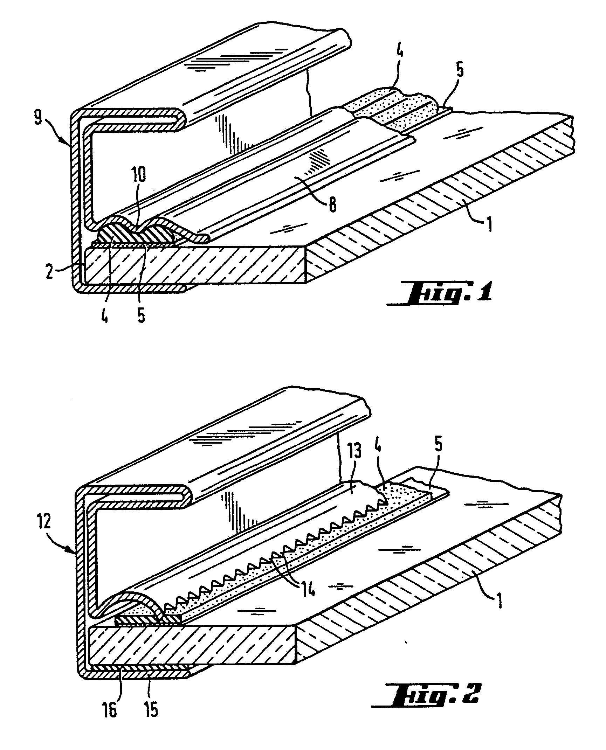

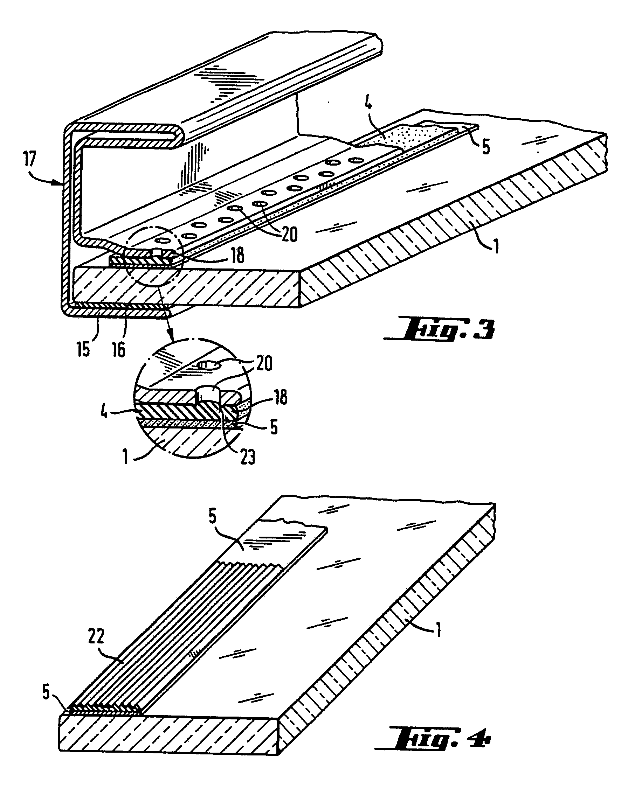

Dans l'exemple de réalisation représenté à la figure 2, le revêtement 4 est déposé sur le vitrage 1 comme décrit précédemment, et la lisière profilée 12 est montée sur le vitrage comme indiqué précédemment, elle est constituée du même matériau. Mais cette fois la lisière 12 présente une branche 13 qui se trouve en contact avec le revêtement 4, et est courbée en arc de cercle, de sorte que le bord de ladite branche 13 qui se trouve le plus éloigné du bord du vitrage, définit, avec le revêtement 4, un angle aigu. Ledit bord est en outre denté, de sorte qu'on voit des dents 14 qui pénétrent dans le revêtement 4 et contribuent à la réalisation d'une liaison durable.

Dans ce mode de réalisation, il est avantageux de procéder au durcissement du revêtement de façon ménagée, afin que seule les couches superficielles du revêtement 4 soit durcies. Ainsi, lors du montage de la lisière 12, les dents 14 s'enfoncent à travers les couches superficielles durcies jusqu'à atteindre les couches les plus profondes non encore durcies. A l'effet de serrage mécanique, s'ajoute de cette façon un certain effet de collage, suivant lequel les dents 14 et les couches inférieures non durcies du revêtement 4 collent entre elles, ce qui produit une fixation particulièrement durable entre la lisière 12 et le vitrage 1.

Pour améliorer encore la fixation de la lisière au vitrage, on peut déposer une mince couche molle 16 sur la branche 15 de la lisière qui entoure le vitrage du côté opposé à celui où se trouve le revêtement 4.

Le vitrage représenté à la figure 3 est fabriqué et préparé de la même façon que celui décrit aux figures précédentes. La lisière 17 a une section en forme de E, c'est-à-dire deux sections en forme de U accolées. La section en U qui enserre le vitrage a une branche 18 qui adhère uniformément au revêtement 4, sous l'effet de pression élastique. Dans la zone qui adhère au revêtement 4, la branche 18 de la lisière est garnie de perforations 20. La matière constitutive du revêtement élastique 4 pénètre légèrement dans lesdites perforations et de ce fait, l'effet d'adhérence mécanique entre la lisière 17 et le vitrage 1 se trouve renforcé.

Dans ce mode de réalisation, il est également possible de faire les perforations 20, par estampage, de façon telle qu'on forme, au bord desdites perforations, et du côté en contact avec le revêtement 4, de petites saillies qui pénètrent dans le revêtement et aident à un maintien supplémentaire.

Le revêtement élastique déposé sur le vitrage peut également présenter une surface non plane, par exemple une surface cannelée, comme cela est représenté figure 4. Dans ce cas, le revêtement désigné par 22, est déposé à l'aide d'une buse d'extrusion profilée en dents de scie, si bien que la surface du revêtement apparaît sous la form de cannelures parallèles. Dn dépose ce revêtement sur le vitrage après y avoir déposé une couche de fond 5. Ce mode de réalisation présente un avantage certain, la surface ainsi formée ayant une souplesse accrue et pouvant par conséquent s'adapter encore mieux à la branche de la section en U de la lisière qui vient se presser contre elle.

## Revendications

1. Vitrage, en particulier vitrage pour véhicule automobile, sur la périphérie duquel est engagée par pincement une lisière métallique, caractérisé en ce que le vitrage (1) est garni, sur une zone périphérique en contact avec la lisière (9, 12, 17), et sur au moins une de ses faces, d'un revêtement (4, 22) à base d'un polymère hautement élastique qui adhère fortement au verre di vitrage.

2. Vitrage selon la revendication 1, caractérisé en ce que l'épaisseur dudit revêtement (4, 22) est de 0,5 à 2 mm.

3. Vitrage selon la revendication 1 ou la revendication 2, caractérisé en ce que la face dudit revêtement (22) qui se trouve en contact avec la lisière a un profil cannelé.

4. Vitrage selon l'une des revendications 1 à 3, caractérisé en ce que ledit revêtement (4, 22) est à base d'un polyuréthane durcissable à l'humidité.

5. Vitrage selon l'une quelconque des revendications 1 à 4, caractérisé en ce que ladite lisière métallique (9, 12, 17) est en un métal résilient.

6. Vitrage selon l'une quelconque des revendications 1 à 5, caractérisé en ce que la lisière métallique (9, 12, 17) présente deux branches qui définissent un profil en U enserrant le vitrage, et en ce que les branches (8,13) de la lisière en contact avec le revêtement (4,22) sont garnies de saillies qui pénêtrent dans ledit revêtement.

7. Vitrage selon l'une des revendications 1 à 5, caractérisé en ce que la branche (18) de la lisière en contact avec le revêtement (4) est garnie de perforations (20) dans lesquelles le matériau qui constitue le revêtement élastique pénètre partiellement.

8. Vitrage selon l'une quelconque des revendications 1 à 7, dans lequel le revêtement (4, 22) se trouve sur l'une des faces du vitrage et en ce que la branche (15) de la lisière qui recouvre le vitrage sur son autre face est pourvue, du côté en contact avec le vitrage, d'une mince couche souple qui augmente l'adhérence entre la lisière et le vitrage.

9. Procédé de fabrication d'un vitrage selon l'une quelconque des revendications 1 à 8, caractérisé en ce qu'on fabrique le vitrage nu, on active l'une de ses faces, on dépose sur la face activée le revêtement en un matériau polymère

réticulable le cas êchéant après avoir intercalé une couche d'ancrage à l'aide d'une buse d'injection, on fait durcir ledit revêtement au moins superficiellement, et on engage le vitrage ainsi revêtu dans une lisière métallique profilée en U de façon à retenir le vitrage par effet de pincement.

10. Procédé selon la revendication g, caractérisé en ce qu'on utilise comme couche d'ancrage et/ou comme revêtement une composition durcissable à l'humidité et on traite le vitrage revêtu par un jet de vapeur d'eau.

## Patentansprüche

1. Verglasung, insbesondere Verglasung für Kraftfahrzeuge, auf deren Randbereich eine metallische profilleiste durch Klemmen befestigt ist, dadurch gekennzeichnet, daß die Verglasung (1) in einem in Kontakt mit der profilleiste (g, 12, 17) stehenden Randbereich wenigstens auf einer ihrer Oberflächen mit einem an der Glasscheibe der Verglasung fest haftenden Belag (4, 22) auf der Basis eines hochelastischen Polymers versehen ist.

2. Verglasung nach Anspruch 1, dadurch gekennzeichnet, daß die Dicke des Belags (4, 22) 0,5 bis 2 mm beträgt.

3. Verglasung nach Anspruch 1 oder 2, dadurch gekennzeichnet, daß die Oberfläche des mit der Profilleiste in Kontakt stehenden Belags (22) mit einer Längsriffelung versehen ist.

4. Verglasung nach einem der Ansprüche 1 bis 3, dadurch gekennzeichnet, daß der Belag (4, 22) aus einem feuchtigkeitshärtenden Polyurethan besteht.

5. Verglasung nach einem der Ansprüche 1 bis 4, dadurch gekennzeichnet, daß die Profilleiste (9, 12, 17) aus einem federelastischen Metall besteht.

6. Verglasung nach einem der Ansprüche 1 bis 5, dadurch gekennzeichnet, daß die Profilleiste (9, 12, 17) zwei Schenkel (8, 13) aufweist, die ein die Glasscheibe einfassendes U-Profil bilden, und daß die in Kontakt mit dem Belag (4, 22) stehenden Schenkel (8, 13) der Profilleiste mit in den Belag eindringenden Vorsprüngen versehen sind.

7. Verglasung nach einem der Ansprüche 1 bis 5, dadurch gekennzeichnet, daß der mit dem Belag (4) in Kontakt stehende Schenkel (18) der profilleiste mit Löchern (20) versehen ist, in die das Material des elastischen Belages (4) teilweise eindringt.

8. Verglasung nach einem der Ansprüche 1 bis 7, dadurch gekennzeichnet, daß der Belag (4, 22) auf einer Oberfläche der Glasscheibe angeordnet ist, und daß der auf der anderen Oberfläche der Glasscheibe (1) anliegende Profilschenkel (15) auf der mit der Glasscheibe in Kontakt stehenden Seite mit einer weichen, die Haftung zwischen der Profilleiste und dem Glas erhöhenden Beschichtung versehen ist.

9. Verfahren zur Herstellung einer Verglasung nach einem der Ansprüche 1 bis 8, dadurch gekennzeichnet, daß die nackte Glasscheibe hergestellt, eine ihrer Oberflächen aktiviert, auf die

7     **0 130 123**     8

aktivierte Glasoberfläche der Belag aus einem aushärtenden Polymer gegebenenfalls unter Zwischenschaltung einer Haftschicht mittels einer Spritzdüse aufgetragen wird, daß man diesen 8elag wenigstens oberflächlich aushärten läßt, und daß auf die derart mit dem Belag versehene Glasscheibe eine U-förmig profilierte metallische Profilleiste aufgebracht wird, die auf der Glasscheibe durch Klemmwirkung haftet.

10. Verfahren nach Anspruch 9, dadurch gekennzeichnet, daß für die Haftschicht und/oder für den Belag eine feuchtigkeitshärtende Zusammensetzung verwendet und die beschichtete Glasscheibe mit einem Wasserdampfstrahl behandelt wird.

**Claims**

A window pane, especially a pane for an automobile vehicle, on the periphery of which a metal surround is engaged by clamping, characterised in that the pane (1) is provided, on a peripheral zone in contact with the surround (9, 12, 17) on at least one of its surfaces with a coating (4, 22) based on a highly elastic polymer which adheres strongly to the glass of the pane.

2. A pane according to claim 1, characterised in that the thickness of said coating (4, 22) is from 0.5 to 2 mm.

3. A pane according to claim 1 or claim 2, characterised in that the surface of said coating (22) in contact with the surround has a channelled cross-section.

4. A pane according to any one of claims 1 to 3, characterised in that said coating (4, 22) is based on a polyurethane which sets on contact with water.

5. A pane according to any one of claims 1 to 4, characterised in that said metal surround (9, 12, 17) is of resilient metal.

6. A pane according to any one of claims 1 to 5, characterised in that the metal surround (9, 12, 17) has two branches which define a U-shaped section enclosing the pane, and in that the branches (8, 13) of the surround in contact with the coating (4, 22) are provided with projections which penetrate said coating.

7. A pane according to any one of claims 1 to 5, characterised in that the branch (18) of the surround in contact with the coating (4) is provided with perforations (20) which the material of the elastic coating partially penetrates.

8. A pane according to any one of claims 1 to 7, in which the coating (4, 22) is on one only of the surfaces of the pane and in that the branch (15) of the surround which covers the pane on its other surface is provided, on its side in contact with the pane, with a thin flexible layer which increases the adhesion between the surround and the pane.

9. A method of making a pane according to any one of claims 1 to 8, characterised in that the bare pane is made, one of its surfaces is activated, the coating of a cross-linkable polymeric material is deposited on the activated surface after deposition of an anchoring layer if required by means of an injection nozzle, said coating is set at least on its surface, and the coated pane is engaged in a metallic surround of U-shaped cross-section so as to retain the pane by a clamping effect.

10. A method according to claim 9, characterised in that a composition settable on contact with water is used as the anchoring layer and/or as the coating and the coated pane is treated with a jet of water vapour.

**Fig.1**

**Fig.2**

17

4

5

20

18

1

15  16

20

18

4

5

1

23

*Fig. 3*

5

22

5

1

*Fig. 4*